(19) Europäisches Patentamt
European Patent Office
Office européen des brevets

(11) EP 2 655 031 B1

(12) FASCICULE DE BREVET EUROPEEN

(45) Date de publication et mention de la délivrance du brevet:
**22.10.2014 Bulletin 2014/43**

(21) Numéro de dépôt: **11815533.2**

(22) Date de dépôt: **22.12.2011**

(51) Int Cl.:
***B29C 39/02*** (2006.01) ***C08F 287/00*** (2006.01)
***C08F 293/00*** (2006.01) ***C08L 33/12*** (2006.01)
***C08L 53/00*** (2006.01)

(86) Numéro de dépôt international:
**PCT/FR2011/053168**

(87) Numéro de publication internationale:
**WO 2012/085487 (28.06.2012 Gazette 2012/26)**

# (54) PLAQUES COULÉES NANOSTRUCTURÉES RÉTICULÉES

VERNETZTE NANOSTRUKTURIERTE GUSSPLATTEN

CROSSLINKED NANOSTRUCTURED CAST SHEETS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2010 FR 1061113**

(43) Date de publication de la demande:
**30.10.2013 Bulletin 2013/44**

(73) Titulaire: **Arkema France**
**92700 Colombes (FR)**

(72) Inventeurs:
- **BOURRIGAUD, Sylvain**
**F-64370 Morlanne (FR)**
- **CAZAUMAYOU, Sylvie**
**F-40100 Dax (FR)**
- **PERY, Stéphanie**
**F-64140 Lons (FR)**

(56) Documents cités:
**FR-A1- 2 879 205 FR-A1- 2 936 524**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention est relative au domaine du renforcement au choc des plaques coulées acryliques.

Le polyméthacrylate de méthyle (PMMA) est un matériau apprécié pour ses excellentes propriétés optiques (notamment le *gloss* et une haute transparence avec une transmission d'au moins 90% de la lumière visible). Cependant, c'est aussi un matériau thermoplastique fragile sensible aux chocs. Cette caractéristique est liée au fait que la température de transition vitreuse du PMMA est de 110°C environ de sorte que dans ce matériau, les chaînes de polymère ne sont pas susceptibles de se mouvoir facilement à température ambiante. Pour certaines applications, il est donc nécessaire d'améliorer la résistance au choc du PMMA tout en conservant sa transparence.

Le renforcement à l'impact du PMMA est généralement amélioré grâce à l'introduction dans la résine acrylique d'un additif choc, appelée coeur-écorce, qui se présente sous forme de particules sphériques multicouches. Ces particules sont préparées par polymérisation en émulsion et récupérées sous forme de poudre par atomisation. Elles comprennent généralement une succession de couches « dures » et « molles ». On peut ainsi trouver des particules bicouches (mou-dur) ou tricouches (dur-mou-dur). Dans le cas des plaques acryliques coulées, obtenues par polymérisation du mélange de monomères dans un moule, l'additif choc est préalablement dispersé dans le mélange de monomères. Dans le cas des plaques acryliques extrudées, l'additif choc est compoundé en extrudeuse avec la résine acrylique. Dans les deux cas, il est nécessaire que l'additif choc soit bien dispersé au sein de la résine acrylique afin de maintenir un niveau de résistance au choc constant et homogène.

**[Art antérieur]**

La demande internationale WO 99/29772 décrit le renforcement à l'impact de résines thermoplastiques semicristallines à l'aide de copolymères à bloc de type SBM (copolymères à bloc styrène-butadiène-méthacrylate de méthyle)..

La demande internationale WO 02/055573 de la Demanderesse décrit le renforcement à l'impact d'un homo-ou copolymère méthacrylique à l'aide d'un copolymère à bloc de type ABA dans lequel B désigne un bloc obtenu à partir d'un diène, par exemple un SBM.

La demande internationale WO 03/062293 de la Demanderesse décrit un procédé de renforcement au choc d'une matrice thermoplastique à l'aide d'un copolymère à bloc $B(-A)_n$ constitué d'un bloc B et de n branches A et préparé à l'aide de la technique de polymérisation radicalaire contrôlée. Ce procécé s'applique au renforcement de nombreux thermoplastiques (PS, PC, PVDF, ...) et notamment à la fabrication de plaques coulées en PMMA.

Le procédé de WO 03/062293 appliqué à la fabrication de plaques coulées n'est pas susceptible de transposition industrielle. Il présente en effet le désavantage de nécessiter une étape de désolventisation suivie d'une étape de redissolution du copolymère. D'une part, ces deux opérations unitaires en augmentant le temps de cycle global affectent le rendement du procédé. D'autre part, l'étape de désolventisation est aussi susceptible de conduire à la formation de gels dans le copolymère $B(-A)_n$, ce qui affecte sa redissolution dans le mélange de monomères et partant, peut détériorer la transparence de la plaque coulée.

De plus, selon le procédé décrit, notamment dans les exemples, il est préférable au cours de la $2^{ème}$ étape, d'amorcer la formation des branches A en même temps que celle de la matrice. Pour cela, le monomère A est mis au contact de deux types d'amorceurs, l'amorceur radicalaire classique et le bloc B réactivable. Le monomère A est donc consommé en même temps selon deux mécanismes de polymérisation radicalaire en compétition, présentant chacun une cinétique propre. Le contrôle de cette $2^{ème}$ étape est très délicat car il suppose d'accorder les vitesses de formation des blocs A et de la matrice. Cela suppose qu'il faille adapter la nature de l'amorceur radicalaire au bloc B et donc aussi adapter soigneusement le cycle de températures. On se trouve, dans la pratique, face à des exigences contradictoires et les compromis possibles conduisent le plus souvent :

- à une demixtion prématurée en cours de polymérisation du copolymère $B(-A)_n$ qui migre à l'interface de la plaque et du moule. On obtient dans ce cas des plaques impossibles à démouler et / ou partiellement ou totalement opaques ;
- à des teneurs inadmissibles en méthacrylate de méthyle résiduel qu'il est impossible d'éliminer une fois la plaque terminée.

Une amélioration est apportée dans le brevet EP 1858939. Le temps de cycle du procédé de ce brevet est amélioré par rapport à celui décrit dans WO 03/062293 car il ne nécessite aucune étape de désolventisation - redissolution.

Toutefois les propriétés mécaniques des matériaux obtenus avec les procédés décrits précédemment ne donnent pas complètement satisfaction et une amélioration des propriétés telles que la résistance au choc et le module de flexion est souhaitée.

La demanderesse a maintenant découvert que d'importantes améliorations de la résistance au choc ainsi que du module de flexion sont observées lorsque certaines compositions contiennent des agents de réticulation.

Si les documents précédemment cités mentionnent souvent l'utilisation possible d'agent de réticulation, aucun n'exemplifie ni décrit les propriétés de compositions en contenant en particulier l'avantage que présente l'utilisation d'agent de réticulation en vue d'une augmentation combinée du module de flexion et de la résistance au choc.

**[Brève description de l'invention]**

La présente invention concerne une composition acrylique réticulée transparente et résistante aux chocs constituée d'une matrice fragile (I) ayant une température de transition vitreuse supérieure a 0°C, et de domaines élastomèriques de dimension caractéristique inférieure à 100nm constitués par des séquences macromoléculaires (II) à caractère souple de température de transition vitreuse inférieure a 0°C , caractérisées par une masse moléculaire en nombre comprise entre 30000 et 500000 g/mole.

**[Description détaillée]**

**Par réticulé on entend** un polymère copolymère dont certaines de ses chaînes sont reliées entre elles par des liaisons covalentes ou des interactions chimiques ou physiques. Ces chaînes réliées entre elles pour la plupart sont distribuées dans les 3 dimensions de l'espace.

**S'agissant de la matrice (I),** celle-ci présente une Tg globale supérieure à 0°C mesurée par DSC et est compatible avec l'homo- ou le copolymère de méthacrylate de méthyle. La matrice (I) est préparée à partir de méthacrylate de méthyle et éventuellement d'un ou plusieurs monomère(s) choisi(s) parmi :

- les monomères acryliques de formule $CH_2$=CH-C(=O)-O-$R_1$ où $R_1$ désigne un atome d'hydrogène, un groupement alkyle en $C_1$-$C_{40}$ linéaire, cyclique ou ramifié éventuellement substitué par un atome d'halogène, un groupement hydroxy, alcoxy, cyano, amino ou époxy tels que par exemple l'acide acrylique, l'acrylate de méthyle, d'éthyle, de propyle, de n-butyle, d'isobutyle, de tertiobutyle, de 2-éthylhexyle, de glycidyle, les acrylates d'hydroxyalkyle, l'acrylonitrile ;
- les monomères méthacryliques de formule $CH_2$=C($CH_3$)-C(=O)-O-$R_2$ où $R_2$ désigne un atome d'hydrogène, un groupement alkyle en $C_1$-$C_{40}$ linéaire, cyclique ou ramifié éventuellement substitué par un atome d'halogène, un groupement hydroxy, alcoxy, cyano, amino ou époxy tels que par exemple l'acide méthacrylique, le méthacrylate de méthyle, d'éthyle, de propyle, de n-butyle, d'isobutyle, de tertiobutyle, de 2-éthylhexyle, de glycidyle, les méthacrylates d'hydroxyalkyle, le méthacrylonitrile ;
- les monomères vinylaromatiques tels que par exemple le styrène, les styrènes substitués comme l'alpha-méthylstyrène, le monochlorostyrène, le tertbutyl styrène.

Le méthacrylate de méthyle est majoritaire. La matrice (I) renferme ainsi une proportion de méthacrylate de méthyle comprise entre 50 et 100%, de préférence entre 75 et 100%, avantageusement entre 90 et 100%.

**S'agissant** des séquences macromoléculaires (II) à caractère souple, celles-ci présentent une température de transition vitreuse inférieure à 0°C (notée Tg et mesurée par DSC). De plus, la masse moyenne en nombre des séquences macromoléculaires (II) à caractère souple de température de transition vitreuse inférieure a 0°C est supérieure à 30000 g/mol, de préférence supérieure à 60000 g/mol, et de manière avantageuse supérieure à 120000 g/mol, mais inférieure à 500000g/mol. La polymolécularité est comprise entre 1.5 et 2.5.

Les séquences macromoléculaires (II) sont préparées à partir d'un ou plusieurs monomère(s) choisi(s) parmi :

- les monomères acryliques de formule $CH_2$=CH-C(=O)-O-$R_1$ où $R_1$ désigne un atome d'hydrogène, un groupement alkyle en $C_1$-$C_{40}$ linéaire, cyclique ou ramifié éventuellement substitué par un atome d'halogène, un groupement hydroxy, alcoxy, cyano, amino ou époxy tels que par exemple l'acide acrylique, l'acrylate de méthyle, d'éthyle, de propyle, de n-butyle, d'isobutyle, de tertiobutyle, de 2-éthylhexyle, de glycidyle, les acrylates d'hydroxyalkyle, l'acrylonitrile ;
- les monomères méthacryliques de formule $CH_2$=C($CH_3$)-C(=O)-O-$R_2$ où $R_2$ désigne un atome d'hydrogène, un groupement alkyle en $C_1$-$C_{40}$ linéaire, cyclique ou ramifié éventuellement substitué par un atome d'halogène, un groupement hydroxy, alcoxy, cyano, amino ou époxy tels que par exemple l'acide méthacrylique, le méthacrylate de méthyle, d'éthyle, de propyle, de n-butyle, d'isobutyle, de tertiobutyle, de 2-éthylhexyle, de glycidyle, les méthacrylates d'hydroxyalkyle, le méthacrylonitrile ;
- les monomères vinylaromatiques tels que par exemple le styrène, les styrènes substitués, l'alpha-méthylstyrène, le monochlorostyrène, le tertbutyl styrène.

Les séquences macromoléculaires (II) ne sont pas préparées à partir d'un diène. L'homme de l'art sait combiner ces monomères de façon à régler :

- la Tg globale du bloc B. Afin d'obtenir un bloc B de Tg inférieure à 0°C, il est nécessaire d'utiliser au moins un monomère présentant une Tg inférieure à 0°C, par exemple l'acrylate de butyle ou l'acrylate de 2-éthylhexyle ;
- l'indice de réfraction du bloc B qui doit être aussi proche que possible que celui de la matrice (I) afin d'assurer la meilleure transparence possible lorsque la transparence est exigée pour l'application visée.

Les séquences macromoléculaires (II) peuvent être composées uniquement d'un monomère présentant une Tg inférieure à 0C°, par exemple l'acrylate de butyle ou l'acrylate de 2-éthylhexyle. Les séquences macromoléculaires (II) peuvent aussi être composé d'au moins un acrylate d'alkyle et d'un monomère vinylaromatique. Avantageusement, les séquences macromoléculaires (II) sont composées d'acrylate de butyle et de styrène dans le rapport massique acrylate de butyle / styrène compris entre 70/30 et 90/10, de préférence entre 75/25 et 85/15.

S'agissant des composés permettant la réticulation (l'agent de réticulation) il s'agit de préférence les monomères acryliques polyfonctionnels tels que par exemple les polyacrylates de polyols, les polyacrylates d'alkylèneglycol ou l'acrylate d'allyle, le diacrylate d'éthylène glycol, de 1,3-butylène glycol, de 1,4-butylène glycol, les monomères méthacryliques polyfonctionnels tels que les polyméthacrylates de polyols, les polyméthacrylates d'alkylèneglycol ou le méthacrylate d'allyle, le diméthacrylate d'éthylène glycol, de 1,3-butylène glycol, de 1,4-butylène glycol, le divinylbenzène ou le trivinylbenzène. De préférence, il s'agit du diméthacrylate de 1,4-butylène glycol (BDMA). La teneur en agent de réticulation est présente comprise entre 0.1 et 2 % en poids par rapport au matériaux polymère réticulé objet de l'invention. De préférence, la teneur en agent de réticulation est comprise entre 0.4 et 2 % en poids par rapport au matériaux polymère réticulé objet de l'invention et encore plus préférentiellement entre 0.6 et 0.8 % en poids par rapport au matériaux polymère réticulé objet de l'invention.
Selon un premier mode de réalisation de l'invention , la préparation de plaques coulées en homo- ou copolymère de méthacrylate de méthyle renforcées à l'impact à l'aide des séquences macromoléculaires (II) comprend les étapes suivantes :

1. préparer les séquences macromoléculaires (II) en mélangeant au(x) monomère(s) destiné(s) à former les séquences macromoléculaires (II) une alcoxyamine de formule générale $Z(\text{-}T)_n$ dans laquelle Z désigne un groupement multivalent, T un nitroxyde et n est un entier supérieur ou égal à 2 ;
2. mélanger les séquences macromoléculaires (II) de l'étape 1 à du méthacrylate de méthyle, l'agent de réticulation, éventuellement au moins un comonomère M et au moins un amorceur radicalaire ;
3. couler le mélange obtenu à l'étape 2 dans un moule, puis le chauffer selon un cycle de température pour obtenir une plaque coulée.

La teneur en bloc B (les séquences macromoléculaires (II)) dans la plaque est comprise entre 5 et 20% en poids, de préférence entre 5 et 15% en poids par rapport au matériau polymère réticulé objet de l'invention.

Selon un deuxième mode de réalisation de l'invention, la préparation de plaques coulées en copolymère de méthacrylate de méthyle réticulé renforcées à l'impact à l'aide d'un copolymère à bloc $B(\text{-}A)_n$ constitué d'un bloc B (les séquences macromoléculaires (II)) et de n branches A (n étant un nombre entier compris entre 1 et 3) comprend les étapes suivantes :

1. préparer le bloc B en mélangeant au(x) monomère(s) destiné(s) à former le bloc B une alcoxyamine de formule générale $Z(\text{-}T)_n$ dans laquelle Z désigne un groupement multivalent, T un nitroxyde et n est un entier supérieur ou égal à 2 ;
2. préparer le copolymère à blocs $B(\text{-}A)_n$ en mélangeant le bloc B obtenu à l'étape 1 au(x) monomère(s) destinés à former les branches A ; les monomères destinés à former les branches A sont identiques à ceux de la matrice 1 c'est à dire du méthacrylate de méthyle, et éventuellement au moins un comonomère M, en absence de l'agent de réticulation.
3. mélanger le copolymère à blocs $B(\text{-}A)_n$ de l'étape 2 à du méthacrylate de méthyle, l'agent de réticulation, éventuellement au moins un comonomère M et au moins un amorceur radicalaire ;
4. couler le mélange obtenu à l'étape 3 dans un moule, puis le chauffer selon un cycle de température pour obtenir une plaque coulée.

La teneur en bloc B (les séquences macromoléculaires (II)) dans la plaque étant comprise entre 5 et 20% en poids, de préférence entre 5 et 15% en poids par rapport au matériau polymère réticulé objet de l'invention.

**S'agissant du copolymère à bloc $B(\text{-}A)_n$,** celui-ci est constitué de plusieurs blocs polymère reliés entre eux par des liaisons covalentes (voir Kirk-Othmer Encyclopedia of Chemical Technology 3ème éd., Vol.6, p.798). Le bloc B est le coeur du copolymère et le bloc A représentent les branches rattachées au bloc B. Le copolymère à bloc $B(\text{-}A)_n$ est donc constitué d'un bloc B et de n branches, n désignant un nombre entier supérieur ou égal à 2, de manière préférée compris entre 2 et 10 et avantageusement compris entre 2 et 8. Le copolymère à bloc $B(\text{-}A)_n$ bien que possédant un

bloc B n'a rien à voir avec les agents de renforcement de l'impact appelés couramment coeur-écorce qui sont composés de particules sensiblement sphériques obtenues par polymérisation en émulsion.

Dans le cadre de l'invention, il peut s'agir d'un copolymère tribloc avec dans ce cas n=2 (un bloc central et 2 branches). A titre d'exemples de copolymère tribloc, il pourra s'agir de:

PMMA-b-polyacrylate de n-butyle-b-PMMA
PMMA-b-poly(acrylate de n-butyle-co-styrène)-b-PMMA
PMMA-b-poly(acrylate d'isobutyle-co-styrène)-b-PMMA
poly(méthacrylate de méthyle-co-acrylate de n-butyle)-b-poly(acrylate de n-butyle-co-styrène)-b-poly(méthacrylate de méthyle-co-acrylate de n-butyle)
(b : symbole utilisé pour désigner un copolymère à bloc, co : symbole utilisé pour désigner un copolymère statistique)

Dans le cas où n>2, le copolymère est dit en étoile.

Le copolymère à bloc $B(-A)_n$ est préparé comme il a été décrit précédemment à l'aide d'une alcoxyamine $Z(-T)_n$ et des monomères permettant d'obtenir le bloc B et les branches A. De préférence, le copolymère $B(-A)_n$ est obtenu à l'aide de l'alcoxyamine $Z(-T)_n$ et de la technique de polymérisation radicalaire contrôlée. Par cette technique, les branches A sont terminées par un nitroxyde, toutes ou en partie selon le contrôle de la polymérisation. Les branches peuvent être terminées en partie par un nitroxyde lorsque par exemple il se produit une réaction de transfert entre un nitroxyde et un méthacrylate d'alkyle comme indiqué dans la réaction ci-dessous :

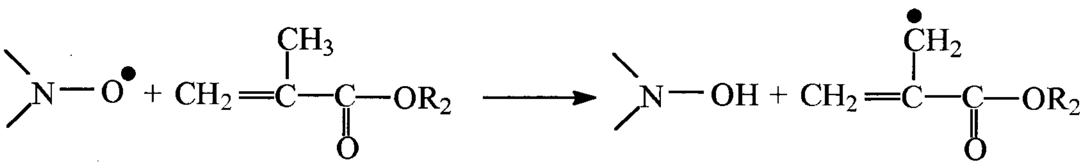

Le copolymère à bloc $A(-B)_n$ présente une masse moléculaire en nombre comprise entre 40000 et 1000000 g/mol, de préférence entre 100000 et 1000000 g/mol. L'indice de polymolécularité est compris entre 1,5 et 3,0, de préférence entre 1,8 et 2,7 et encore préférentiellement entre 1,9 et 2,7.

**S'agissant de l'alcoxyamine,** celle-ci est décrite par la formule générale $Z(-T)_n$ dans laquelle Z désigne un groupement multivalent, T un nitroxyde et n un entier supérieur à 2, de préférence compris entre 2 et 10, avantageusement compris entre 2 et 8.

n représente la fonctionnalité de l'alcoxyamine, c'est-à-dire le nombre de radicaux nitroxydes T libérables par l'alcoxyamine selon le mécanisme :

$$Z(-T)_n \rightleftharpoons Z + n\,T$$

Cette réaction est activée par la température. En présence de monomère(s), l'alcoxyamine activée amorce une polymérisation. Le schéma ci-dessous illustre la préparation d'un copolymère polyM2-polyM1-polyM2 à base d'une alcoxyamine pour laquelle n=2. Le monomère M1 est d'abord polymérisé après activation de l'alcoxyamine, puis une fois le bloc polyM1 terminé, le monomère M2 est ensuite polymérisé :

$$T\text{-}Z\text{-}T \xrightarrow{M_1} T\text{-}(M_1)_x\text{-}Z\text{-}(M_1)_x\text{-}T$$

$$\xrightarrow{M_2} T\text{-}\underbrace{(M_2)_y}_{polyM_2}\text{-}\underbrace{(M_1)_x\text{-}Z\text{-}(M_1)_x}_{polyM_1}\text{-}\underbrace{(M_2)_y}_{polyM_2}\text{-}T$$

Le principe de la préparation de copolymères à blocs reste valable pour n>2.

Z désigne un groupement multivalent c'est-à-dire un groupement susceptible de libérer après activation plusieurs sites radicalaires. L'activation en question se produit par rupture de liaison covalente Z-T.

A titre d'exemple, Z peut être choisi parmi les groupements (I) à (VIII) suivants :

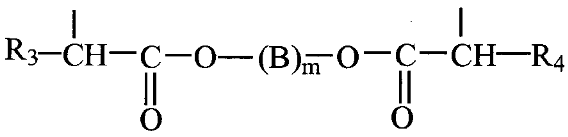
(I)

dans laquelle $R_3$ et $R_4$ identiques ou différents, représentent un radical alkyle, linéaire ou ramifié ayant un nombre d'atomes de carbone allant de 1 à 10, des radicaux phényle ou thiényle éventuellement substitués par un atome d'halogène tel que F, Cl, Br, ou bien par un radical alkyle, linéaire ou ramifié, ayant un nombre d'atomes de carbone allant de 1 à 4, ou bien encore par des radicaux nitro, alcoxy, aryloxy, carbonyle, carboxy ; un radical benzyle, un radical cycloalkyle ayant un nombre d'atomes de carbone allant de 3 à 12, un radical comportant une ou plusieurs insaturations ; B représente un radical alkylène linéaire ou ramifié, ayant un nombre d'atomes de carbone allant de 1 à 20 ; m est un nombre entier allant de 1 à 10 ;

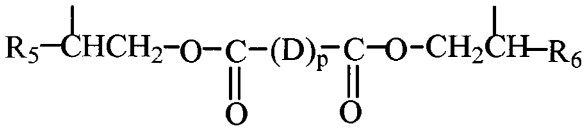
(II)

dans laquelle $R_5$ et $R_6$, identiques ou différents, représentent des radicaux aryle, pyridyle, furyle, thiényle éventuellement substitués par un atome d'halogène tel que F, Cl, Br, ou bien par un radical alkyle, linéaire ou ramifié, ayant un nombre d'atomes de carbone allant de 1 à 4, ou bien encore par des radicaux nitro, alcoxy, aryloxy, carbonyle, carboxy ; D représente un radical alkylène, linéaire ou ramifié, ayant un nombre d'atomes de carbone allant de 1 à 6, un radical phénylène, un radical cycloalkylène ; p étant un nombre entier allant de 1 à 10 ;

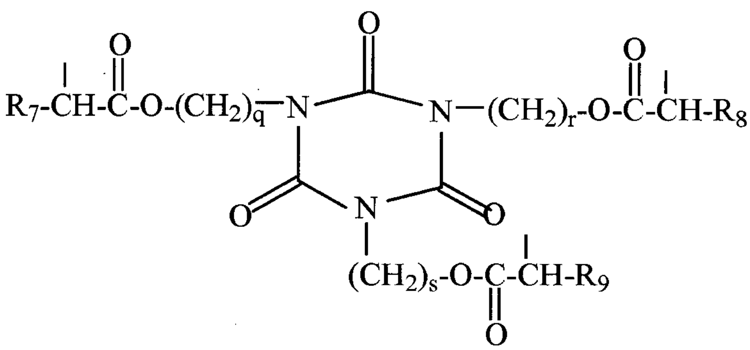
(III)

dans laquelle $R_7$, $R_8$ et $R_9$, identiques ou différents, ont les mêmes significations que $R_3$ et $R_4$ de la formule (I), q, r et s sont des nombres entiers allant de 1 à 10 ;

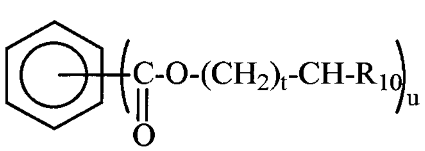
(IV)

dans laquelle $R_{10}$ a la même signification que $R_5$ et $R_6$ de la formule (II), t est un nombre entier allant de 1 à 4, u est un entier compris entre 2 et 6 (le groupement aromatique est substitué);

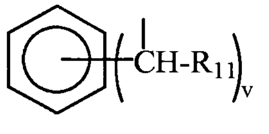
(V)

dans laquelle $R_{11}$ a la même signification que le radical $R_{10}$ de la formule (IV) et v est un entier compris entre 2 et 6 ;

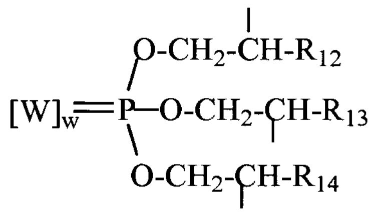

(VI)

dans laquelle $R_{12}$, $R_{13}$ et $R_{14}$, identiques ou différents, représentent un radical phényle, éventuellement substitué par un atome d'halogène tel que Cl, Br, ou bien par un radical alkyle, linéaire ou ramifié, ayant un nombre d'atomes de carbone allant de 1 à 10 ; W représente un atome d'oxygène, de soufre, de sélénium, w est égal à zéro ou 1 ;

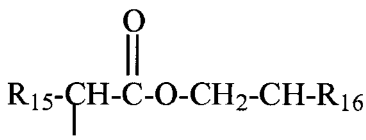

(VII)

dans laquelle $R_{15}$ a la même signification que $R_3$ de la formule (I), $R_{16}$ a la même signification que $R_5$ ou $R_6$ de la formule (II) ;

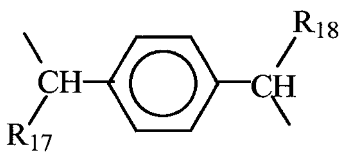

(VIII)

dans laquelle $R_{17}$ et $R_{18}$ identiques ou différents représentent un atome d'hydrogène, un radical alkyle, linéaire ou ramifié ayant un nombre d'atomes de carbone allant de 1 à 10, un radical aryle, éventuellement substitué par un atome d'halogène ou un hétéro atome.

T désigne un nitroxyde qui est un radical libre stable présentant un groupement =N-O• c'est-à-dire un groupement sur lequel est présent un électron célibataire. On désigne par radical libre stable un radical tellement persistant et non réactif vis-à-vis de l'air et de l'humidité dans l'air ambiant, qu'il peut être manipulé et conservé pendant une durée bien plus longue que la majorité des radicaux libres (voir à ce propos, Accounts of Chemical Research 1976, 9, 13-19). Le radical libre stable se distingue ainsi des radicaux libres dont la durée de vie est éphémère (de quelques millisecondes à quelques secondes) comme les radicaux libres issus des amorceurs habituels de polymérisation comme les peroxydes, les hydroperoxydes ou les amorceurs azoïques. Les radicaux libres amorceurs de polymérisation tendent à accélérer la polymérisation alors que les radicaux libres stables tendent généralement à la ralentir. On peut dire qu'un radical libre est stable au sens de la présente invention s'il n'est pas amorceur de polymérisation et si, dans les conditions habituelles de l'invention, la durée de vie moyenne du radical est d'au moins une minute.

T est représenté par la structure :

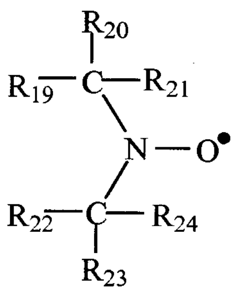

(IX)

dans laquelle $R_{19}$, $R_{20}$, $R_{21}$, $R_{22}$, $R_{24}$ et $R_{24}$ désignent des groupements :

- alkyles linéaires ou branchés en $C_1$-$C_{20}$, de préférence en $C_1$-$C_{10}$ tels que méthyle, éthyle, propyle, butyle, isopropyle,

isobutyle, tertiobutyle, néopentyle, substitués ou non,

- aryles en $C_6$-$C_{30}$ substitués ou non tels que benzyle, aryl(phényl)
- cycliques saturés en $C_1$-$C_{30}$

et dans laquelle les groupements $R_{19}$ et $R_{22}$ peuvent faire partie d'une structure cyclique $R_{19}$-CNC-$R_{22}$ éventuellement substituée pouvant être choisie parmi :

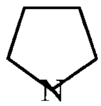 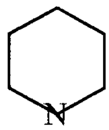 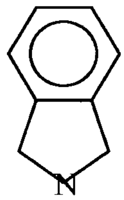 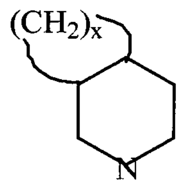 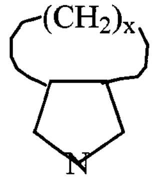

dans lesquelles x désigne un entier compris entre 1 et 12.

A titre d'exemples, on pourra utiliser les nitroxydes suivants :

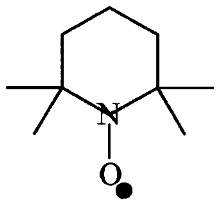
TEMPO

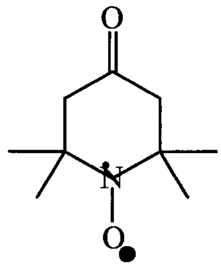
OXO-TEMPO

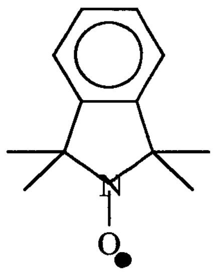

De manière particulièrement préférée, les nitroxydes de formule (X) sont utilisés dans le cadre de l'invention :

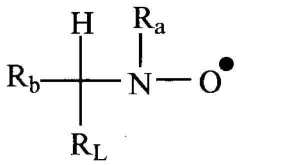 (X)

$R_a$ et $R_b$ désignant des groupements alkyles identiques ou différents possédant de 1 à 40 atomes de carbone, éventuellement reliés entre eux de façon à former un cycle et éventuellement substitués par des groupements hydroxy, alcoxy ou amino,

$R_L$ désignant un groupement monovalent de masse molaire supérieur à 16 g/mol, de préférence supérieur à 30 g/mol. Le groupement $R_L$ peut par exemple avoir une masse molaire comprise entre 40 et 450 g/mol. Il s'agit de préférence d'un groupement phosphoré de formule générale (XI) :

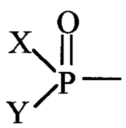 (XI)

dans laquelle X et Y, pouvant être identiques ou différents, peuvent être choisis parmi les radicaux alkyle, cycloalkyle, alkoxyle, aryloxyle, aryle, aralkyloxyle, perfluoroalkyle, aralkyle et peuvent comprendre de 1 à 20 atomes de carbone ; X et/ou Y peuvent également être un atome d'halogène comme un atome de chlore, de brome ou de fluor.

De manière avantageuse, $R_L$ est un groupement phosphonate de formule :

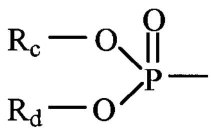

(XII)

dans lequel $R_c$ et $R_d$ sont deux groupements alkyles identiques ou différents, éventuellement reliés de manière à former un cycle, comprenant de 1 à 40 atomes de carbone, éventuellement substitués ou non.

Le groupement $R_L$ peut également comprendre au moins un cycle aromatique tel que le radical phényle ou le radical naphtyle, substitué par exemple par un ou plusieurs radical(aux) alkyle comprenant de 1 à 10 atomes de carbone.

Les nitroxydes de formule (X) sont préférés car ils permettent d'obtenir un bon contrôle de la polymérisation radicalaire des monomères (méth)acryliques comme cela est enseigné dans WO 03/062293. Les alcoxyamines de formule (XIII) ayant un nitroxyde de formule (X) sont donc préférées :

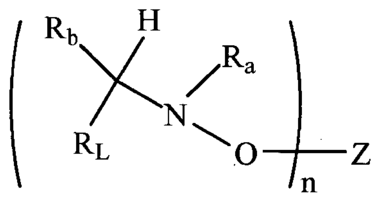

(XIII)

dans laquelle :

Z désigne un groupement multivalent , n est un nombre entier supérieur ou égal à 1;
$R_a$ et $R_b$ désignent des groupements alkyles identiques ou différents possédant de 1 à 40 atomes de carbone, éventuellement reliés entre eux de façon à former un cycle et éventuellement substitués par des groupements hydroxy, alcoxy ou amino ;
$R_L$ désigne un groupement monovalent de masse molaire supérieur à 16 g/mol, de préférence supérieur à 30 g/mol. Le groupement $R_L$ peut par exemple avoir une masse molaire comprise entre 40 et 450 g/mol. Il s'agit de préférence d'un groupement phosphoré de formule générale (XI) :

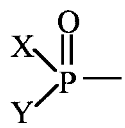

(XI)

dans laquelle X et Y, pouvant être identiques ou différents, peuvent être choisis parmi les radicaux alkyle, cycloalkyle, alkoxyle, aryloxyle, aryle, aralkyloxyle, perfluoroalkyle, aralkyle et peuvent comprendre de 1 à 20 atomes de carbone ; X et/ou Y peuvent également être un atome d'halogène comme un atome de chlore, de brome ou de fluor.

De manière avantageuse, $R_L$ est un groupement phosphonate de formule :

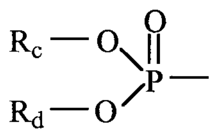

(XII)

dans lequel $R_c$ et $R_d$ sont deux groupements alkyles identiques ou différents, éventuellement reliés de manière à former un cycle, comprenant de 1 à 40 atomes de carbone, éventuellement substitués ou non.

Le groupement $R_L$ peut également comprendre au moins un cycle aromatique tel que le radical phényle ou le radical naphtyle, substitué par exemple par un ou plusieurs radical(aux) alkyle comprenant de 1 à 10 atomes de carbone.

A titre d'exemple de nitroxyde de formule (X) pouvant être porté par l'alcoxyamine (XIII), on peut citer :

- le N-tertiobutyl-1-phényl-2-méthylpropyl nitroxyde,
- le N-(2-hydroxyméthylpropyl)-1-phényl-2-méthylpropyl nitroxyde,
- le N-tertiobutyl-1-dibenzylphosphono-2,2-diméthyl-propyl nitroxyde,
- le N-tertiobutyl-1-di(2,2,2-trifluoroéthyl)phosphono-2,2-diméthylpropyl-nitroxyde,

- le N-tertiobutyl[(1-diéthylphosphono)-2-méthylpropyl]nitroxyde,
- le N-(1-méthyléthyl)-1-cyclohexyl-1-(diéthyl-phosphono)nitroxyde,
- le N-(1-phénylbenzyl)-[(1-diéthylphosphono)-1-méthyléthyl]nitroxyde,
- le N-phényl-1-diéthylphosphono-2,2-diméthylpropylnitroxyde,
- le N-phényl-1-diéthylphosphono-1-méthyléthylnitroxyde,
- le N-(1-phényl2-méthylpropyl)-1-diéthylphosphonométhyléthylnitroxyde,
- ou encore le nitroxyde de formule

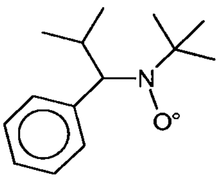

Le nitroxyde de formule (XIV) est particulièrement préféré :

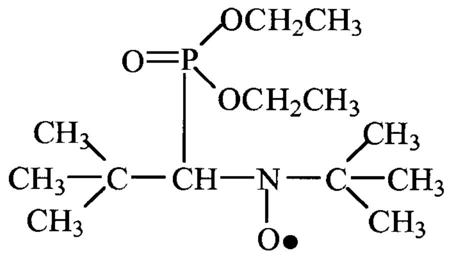

(XIV)

Il s'agit du N-tertiobutyl-1-diéthylphosphono-2,2-diméthylpropyl nitroxyde, couramment appelé SG1 pour simplifier.

L'alcoxyamine (I), et notamment l'alcoxyamine (XIII), peuvent être préparées par des recettes décrites par exemple dans US590549 ou dans FR99.04405. Une méthode pouvant être utilisée consiste à réaliser le couplage d'un radical carboné avec un nitroxyde. Le couplage peut être réalisé à partir d'un dérivé halogéné en présence d'un système organométallique comme CuX/ligand (X=C1 ou Br) selon une réaction de type ATRA (Atom Transfer Radical Addition) tel que décrit par D. Greszta et coll. dans Macromolecules 1996, 29, 7661-7670.

$$Z(-X)_n + n\,T \xrightarrow[\text{solvant} \quad - n\,CuX_2/\text{ligand}]{+ n\,CuX/\text{ligand}} Z(-T)_n$$

Les alcoxyamines pouvant être utilisées dans le cadre de l'invention sont représentées ci-dessous :

DIAMINS :

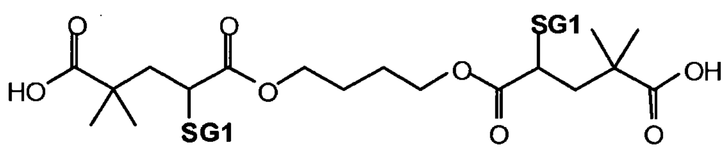

TRIAMINS

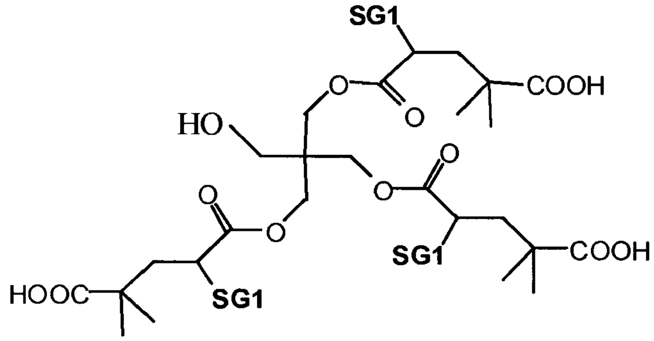

De préférence on utilise la DIAMINS.

On ne sortirait pas du cadre de la présente invention en combinant plusieurs alcoxyamines répondant à la formule (I), en particulier plusieurs alcoxyamines de formule (XIII). Ces mélanges pourraient comprendre ainsi par exemple une alcoxyamine ayant n1 nitroxydes attachés et une alcoxyamine ayant n2 nitroxydes attachés avec n1 différent de n2. Il pourrait s'agir aussi d'une combinaison d'alcoxyamines porteuses de nitroxydes différents.

**S'agissant de l'amorceur radicalaire,** il peut être choisi parmi les peroxydes de diacyles, les peroxyesters, les peroxydes de dialkyle, les peroxyacétals, les composés azoïques. Des amorceurs radicalaires pouvant convenir sont par exemple le carbonate d'isopropyle, le peroxyde de benzoyle, de lauroyle, de caproyle, de dicumyle, le perbenzoate de tertiobutyle, le 2-éthyl perhexanoate de tertiobutyle, l'hydroperoxyde de cumyle, le 1,1-di(tert-butylperoxy)-3,3,5-trimethylcyclohexane, le peroxyisobutyrate de tertiobutyle, le peracétate de tertiobutyle, le perpivalate de tertiobutyle, le perpivalate d'amyle, 1,1-Di(t-amylperoxy) - cyclohexane, le peroctoate de tertiobutyle, l'azodiisobutyronitrile (AIBN), l'azodiisobutyramide, le 2,2'-azo-bis(2,4-diméthylvaléronitrile), le 4,4'-azo-bis(4-cyanopentanoïque acide), le 1,1'-Azobis(cyanocyclohexane). On ne sortirait pas du cadre de l'invention en utilisant un mélange d'amorceurs radicalaires choisis dans la liste ci-dessus. L'amorceur radicalaire préféré est le 1,1-Di(t-amylperoxy) - cyclohexane.

La teneur en amorceur radicalaire par rapport aux monomères du mélange qui est coulé dans le moule varie de 100 à 2000 ppm, de préférence entre 200 et 1000 ppm en poids. Cette teneur peut varier en fonction de l'application et de l'épaisseur visée.

**D'autres ingrédients** peuvent être rajoutés à titre optionnel dans le mélange qui est coulé dans le moule (au cours de l'étape 3 du procédé selon l'invention ou de l'étape 1 de la variante). On peut citer à titre non limitatif :

- des charges opacifiantes, telles que le $TiO_2$ ou le $BaSO_4$, utilisées le plus souvent sous forme de pâtes préfabriquées dans un plastifiant de type dialkyl phtalate ;
- des colorants organiques ou de pigments minéraux colorés ;
- des plastifiants ;
- des additifs anti-UV tels que le Tinuvin P de Ciba utilisé à des teneurs de 0 à 1000 ppm et de préférence 50 à 500 ppm par rapport au mélange qui est coulé dans le moule ;
- des stabilisants lumière ou chaleur comme par exemple le Tinuvin 770 ;
- des antioxydants ;
- des additifs ignifugeants tels que par exemple le tris (2-chloro-propyle) phosphate ;
- des agents épaississants tel que par exemple l'acétobutyrate de cellulose ;
- des agents de démoulage tels que par exemple le dioctyl sulfosuccinate de sodium utilisés à des teneurs de 0 à 500 ppm et de préférence 0 à 200 ppm par rapport au mélange qui est coulé dans le moule ;
- des charges minérales ou organiques (par ex. polyamide, PTFE, $BaSO_4$) destinées à diffuser la lumière (par exemple pour donner des plaques pouvant être éclairées par la tranche).

Il peut s'agir aussi (à titre optionnel) d'un agent limiteur de chaînes couramment utilisé dans le domaine des plaques coulées, par exemple de gamma-terpinène ou de terpinolène. L'agent limiteur de chaînes préféré est le gamma-terpinène à des teneurs comprises entre 0 et 500 ppm et de préférence entre 0 et 100 ppm par rapport aux monomères du mélange qui est coulé dans le moule.

L'agent limiteur de chaînes peut aussi être ajouté avant la formation des branches A (au cours de l'étape 2 du deuxième mode de réalisation selon l'invention) à des teneurs comprises entre 0 et 500 ppm et de préférence entre 0 et 100 ppm par rapport au(x) monomère(s) destiné(s) à former les branches A.

Le renforcement à l'impact selon l'invention est réalisé grâce aux séquences macromoléculaires (II) mais il n'est pas exclu que des additifs de renforcement à l'impact de type coeur-écorce oient ajoutés en synergie avec le copolymère $B(-A)_n$. Ces additifs de type coeur-écorce ont connu de l'homme de l'art et peuvent être par exemple du type mou-dur ou dur-mou-dur, notamment ceux vendus sous les marques DURASTRENGTH® ou METABLEND® (par

ex. D320) de la société ARKEMA. La proportion d'additifs de type coeur-écorce / copolymère à bloc $B(-A)_n$ peut ainsi être comprise entre 90/10 et 10/90.

Le procédé de l'invention se prête à la fabrication de plaques coulées ayant une épaisseur de 2 à 30 mm et de préférence de 2,5 à 12 mm.

**S'agissant du procédé,** celui-ci comprend les étapes suivantes :

Au cours de la 1ère étape, le bloc B est préparé en mélangeant l'alcoxyamine $Z(-T)_n$ et le(s) monomère(s) destiné(s) à former le bloc B et en chauffant le mélange obtenu à une température suffisante pour activer l'alcoxyamine. Il est possible de rajouter également au mélange du nitroxyde afin d'assurer un meilleur contrôle de la polymérisation. Le nitroxyde qui est rajouté peut être identique à celui qui est porté sur l'alcoxyamine ou différent. La proportion molaire du nitroxyde ajouté par rapport à l'alcoxyamine est comprise entre 0 et 20%, de préférence entre 0 et 10%.

La conversion peut varier entre 10 et 100%. Cependant, de préférence, la polymérisation est arrêtée pour une conversion comprise entre 50 et 100%, et avantageusement entre 50 et 80%.

Cette étape peut être réalisée dans un réacteur fermé ou dans un réacteur ouvert, par exemple un réacteur de type piston. De préférence, il s'agit d'un réacteur fermé. Le bloc B est préparé à une température comprise entre 80 et 150°C, de préférence entre 80 et 130°C. Cette température est liée à l'alcoxyamine et au(x) monomère(s) utilisés. La durée de la polymérisation peut varier entre 30 minutes et 8 heures, de préférence entre 1 et 8 heures, avantageusement entre 2 et 6 heures. Il est préférable d'éviter la présence d'oxygène. Pour ce faire, le mélange réactionnel est en général dégazé sous pression réduite et le réacteur inerté à l'aide d'un balayage à l'azote ou à l'argon après introduction des réactifs.

A l'issue de cette 1ère étape, on obtient le bloc B, éventuellement mélangé avec le(s) monomère(s) non consommé(s). Ils peuvent être éliminés par distillation sous pression réduite à une température inférieure à 80°C. Dans le cadre du premier mode de réalisation de l'invention, le bloc B constituant les séquences macromoléculaires (II) est mélangé à du méthacrylate de méthyle, l'agent de réticulation, éventuellement au moins un comonomère M et au moins un amorceur radicalaire puis est coulé dans un moule, qui subit ensuite un cycle de température pour obtenir une plaque coulée. Le cycle thermique comprend un premier palier de température compris entre 60 et 120 °C durant un temps pouvant varier de 2 à 6 heures suivit d'un second palier de température compris entre 100 et 150°C durant un temps pouvant varier de 1 à 4 heures

Selon le deuxième mode de réalisation de l'invention, le bloc B, éventuellement mélangé avec le(s) monomère(s) non consommé(s) de la 1ère étape est soumi à une 2ème étape de polymérisation, en présence du ou des monomère(s) destinés à former les branches A à l'exclusion de l'agent réticulant.

Cette étape peut être réalisée dans le même réacteur que le réacteur employé à 1ère étape ou dans un autre réacteur. De préférence, il s'agit du même réacteur fermé.

Si la conversion à la 1ère étape est inférieure à 100%, on peut trouver dans le mélange le(s) monomère(s) non entièrement polymérisé(s) de la 1ère étape. Le mélange comprend donc le bloc B, le(s) monomère(s) destinés à former le bloc A que l'on a ajouté(s) et éventuellement, le(s) monomère(s) non entièrement polymérisé(s) à la 1ère étape. La proportion de bloc B dans ce mélange est comprise entre 1 et 20 %, de préférence entre 5 et 15 %.

Les branches A sont formées à une température comprise entre 80 et 150°C, de préférence entre 80 et 130°C. La durée de la polymérisation peut varier entre 30 minutes et 8 heures, de préférence entre 1 et 4 heures, avantageusement entre 1 et 2 heures. Comme lors de l'étape 1, il est préférable d'éviter la présence d'oxygène. Pour ce faire, le mélange réactionnel est en général dégazé sous pression réduite et le réacteur inerté à l'aide d'un balayage à l'azote ou à l'argon après introduction des réactifs. Il est également envisageable de rajouter du nitroxyde au cours de cette étape, ce nitroxyde pouvant être différent de celui porté par l'alcoxyamine. La proportion de nitroxyde ajoutée à cette étape est comprise entre 0 et 20% molaire par rapport à l'alcoxyamine, de préférence entre 0 et 10% molaire.

Au cours de la 2ème étape, la conversion peut varier entre 10 et 100%. Cependant, afin de ne pas obtenir un mélange trop visqueux, il est préférable de limiter la conversion entre 5 et 50%, de préférence entre 5 et 30%, de sorte que le mélange obtenu à l'issue de cette 2ème étape comprend le copolymère à bloc $B(-A)_n$ mélangé au(x) monomère(s) non converti(s). Ce mélange est communément appelé « sirop ».

Au cours de la 3ème étape, toujours selon le deuxième mode de réalisation de l'invention on ajoute au mélange obtenu à la 2ème étape, du méthacrylate de méthyle, le réticulant, éventuellement au moins un autre monomère M, au moins un amorceur radicalaire et éventuellement un limitateur de chaîne.

Cette étape réalisée à température ambiante peut être réalisée dans un autre réacteur ou de préférence dans le même réacteur que celui utilisé à la 2ème étape. De manière avantageuse, le même réacteur fermé est utilisé pour les trois étapes qui viennent d'être décrites.

Au cours de la 4ème étape, le mélange de la 3ème étape est coulé dans un moule, puis chauffé. Cette dernière étape est fort semblable à celle que l'on peut rencontrer dans le cas des procédés de fabrication de plaques acryliques déjà connus. Le moule est formé de deux plaques de verre séparées par un joint en PVC par exemple. Le chauffage peut

par exemple consister à utiliser une cuve remplie d'eau ou une étuve ventilée dans laquelle on place en rangée les moules avec leur mélange et dont la température est modifiée.

Selon l'invention, le chauffage peut être effectué à température constante (isotherme) ou bien il peut suivre une programmation de températures bien précis. La programmation de températures comprend généralement un premier palier à une température de l'ordre de 70°C, suivie d'un deuxième palier à une température de l'ordre de 120°C. Après refroidissement, on retire du moule la plaque obtenue.

Le procédé de la présente invention est applicable à la production de plaques acryliques industrielles de différentes épaisseurs. L'homme du métier sait adapter le procédé de fabrication, notamment pour ce qui concerne la 3$^{ème}$ étape (choix de l'amorceur radicalaire et de la programmation de températures), en fonction de l'épaisseur de la plaque acrylique.

**S'agissant de la plaque coulée,** celle-ci comprend un copolymère du méthacrylate de méthyle réticulé qui constitue la matrice dans laquelle est dispersé de façon homogène les séquences macromoléculaires (II). Les séquences macromoléculaires (II) ont tendance à s'organiser à l'intérieur de la matrice pour donner des domaines répartis de façon homogène. La matrice constitue donc une phase continue copolymère de méthacrylate de méthyle réticulé. Les domaines, visibles à l'aide de la microscopie électronique ou du microscope à force atomique, se présentent sous forme de nodules dont la taille est inférieure à 100nm. La taille des domaines est estimée à partir des analyses de microscope à force atomique.

Les plaques fabriquées selon la présente invention peuvent être utilisées comme vitrages, murs antibruit, écrans plats, etc. ou bien être transformées en articles divers par thermoformage, découpage, polissage, collage, pliage. Ces plaques peuvent notamment servir à fabriquer des articles sanitaires (baignoires, éviers, receveurs de douche,...). Pour cela, les plaques sont thermoformées selon une manière connue de l'homme du métier.

Les masses moléculaires sont déterminées par chromatographie d'exclusion stérique (SEC en anglais) ou chromatographie sur gel perméable (GPC en anglais). Les polymères sont solubilisés à 1g/l dans du THF stabilisé au BHT. L'étalonnage est effectué grâce à des étalons de polystyrène monodisperses.

Differential Scanning Thermographie (DSC) pour estimer la température de transition vitreuse Tg est fait selon la norme ISO 11357-2.

EXEMPLES

**1$^{ère}$ étape :** préparation d'un bloc B à base d'acrylate de butyle et de styrène

On introduit dans un réacteur métallique de 2 litres muni d'un agitateur à hélice, d'une double enveloppe de chauffage par circulation d'huile et d'une prise vide / azote :

- 616 g de d'acrylate de butyle
- 84 g de styrène
- 2,4 g de dialcoxyamine DIAMIS (94 % de pureté et 0.35 % SG1 libre) soit 2,3 g de DIAMS pure
- 0.09 g de SG1 à 85 % de pureté (soit 0,077 g de SG1 pur), ce qui représente un excès de 5% molaire par fonction alcoxy portée par le DIAMS en tenant compte des 0,35% de SG1 libre déjà présent dans le DIAMS.

Après introduction des réactifs, le mélange réactionnel est dégazé à trois reprises sous vide / azote. Le réacteur est alors fermé puis l'agitation (50 tr/min) et le chauffage (consigne de température : 125 °C) sont mis en route. La température du mélange réactionnel atteint 113 °C en 30 min environ. La pression s'établit vers 1,5 bar. La température du réacteur est maintenue en palier à 115°C pendant 522 min. On récupère après refroidissement 608 g d'un mélange à 67% d'extrait sec. L'acrylate de butyle en excès est ensuite éliminé par évaporation à 70°C sous pression réduite pendant 3 h. et remplacé par 700 g de MAM. On récupère ainsi 1110 g d'une solution à 37% dans le MAM d'un macro radical « strippé » (débarrassé de son acrylate de butyle en excès). Le rapport en poids acrylate de butyle : styrène du macro radical obtenu est 83 : 17. L'analyse par GPC du bloc B donne les résultats suivants : $M_n$ : 120000 g/mol ; $M_w$ : 252000 g/mol ; polymolécularité : 2,1.

Etape 2

Les plaques sont réalisées à partir d'un mélange de 10% en poids d'une séquence macromoléculaire macro amorceur de polyacrylate de butyle co styrène préparée dans l'étape 1, de methacrylate de méthyle, de diméthacrylate de 1,4-butylène glycol (BDMA, en quantité varialbe selon l'essai considéré, ainsi que 800 pmm de 1,1-Di(t-amylperoxy) - cyclohexane. Le mélange est ensuite coulé dans un moule. Le moule est d'abord chauffé à une température proche de 90°C pendant environ 3 heures.

La plaque subit ensuite une post-polymérisation à une température proche de 130°C pendant environ 2 heures.

| ESSAI | %BDMA | Module de flexion (MPa) | Choc charpy Non entaillé ($KJ/m^2$) |
|---|---|---|---|
| 1 | 1 | 2100 | 65 |
| 2 | 0.8 | 2200 | 65 |
| 3 | 0.6 | 2180 | 60 |
| 4 | 0.4 | 1983 | 53 |
| 5 | 0.3 | 1700 | 38 |
| 6 | 0.2 | 1300 | 37 |
| 7 | 0.1 | 851 | 43 |
| 8 | 0 | 900 | 40 |

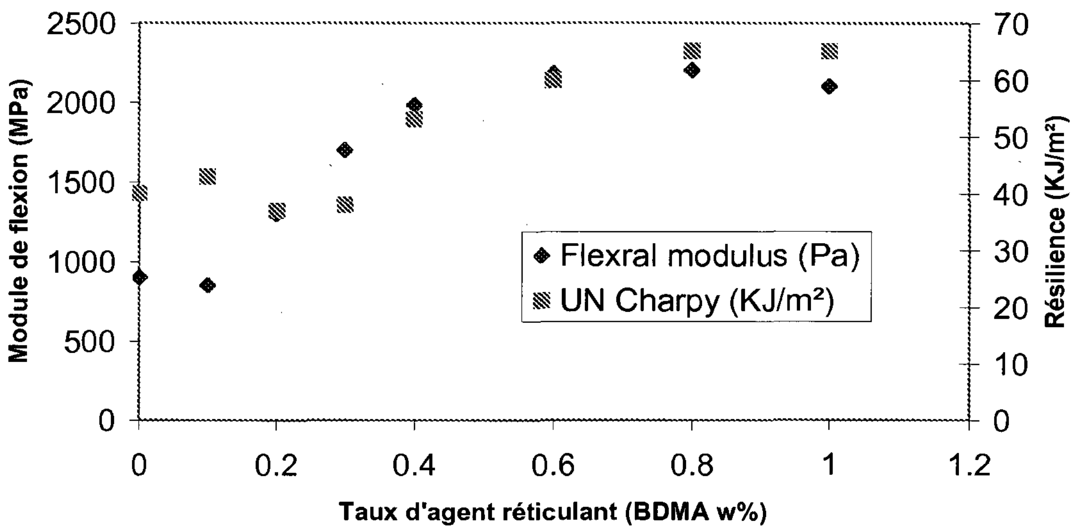


On remarque que la résistance au choc (résilience) et la module de flexion sont une fonction croissante du taux de réticulant avec un maximum autour de 0.7 %.

## Revendications

1. Composition acrylique réticulée transparente et résistante aux chocs constituée d'une matrice fragile (I) ayant une température de transition vitreuse supérieure a 0°C, et de domaines élastomèriques de dimension caractéristique inférieure à 100nm constitués par des séquences macromoléculaires (II) à caractère souple de température de transition vitreuse inférieure a 0°C, **caractérisées par** une masse moléculaire en nombre comprise entre 30000 et 500000 g/mole, dans laquelle la teneur en agent de réticulation est comprise entre 0.1 et 2 % en poids par rapport au matériau polymère réticulé.

**2.** Composition selon la revendication 1 dans laquelle la teneur en séquences macromoléculaires (II) est comprise entre 5 et 20% en poids.

**3.** Composition selon les revendication 1 à 2 dans laquelle l'agent de réticulation est choisi parmi les polyacrylates de polyols, les polyacrylates d'alkylèneglycol ou l'acrylate d'allyle, le diacrylate d'éthylène glycol, de 1,3-butylène glycol, de 1,4-butylène glycol, les monomères méthacryliques polyfonctionnels tels que les polyméthacrylates de polyols, les polyméthacrylates d'alkylèneglycol ou le méthacrylate d'allyle, le diméthacrylate d'éthylène glycol, de 1,3-butylène glycol, de 1,4-butylène glycol, le divinylbenzène ou le trivinylbenzène

**4.** Composition selon la revendication 1 à 2 dans laquelle l'agent de réticulation est le diméthacrylate de butylène glycol.

**5.** Composition selon la revendication 1 dans la quelle les séquences macromoléculaires (II) sont préparées à partir des monomères choisis parmi les monomères acryliques de formule $CH_2=CH-C(=O)-O-R_1$ où $R_1$ désigne un atome d'hydrogène, un groupement alkyle en $C_1$-$C_{40}$ linéaire, cyclique ou ramifié éventuellement substitué par un atome d'halogène, un groupement hydroxy, alcoxy, cyano, amino ou époxy tels que par exemple l'acide acrylique, l'acrylate de méthyle, d'éthyle, de propyle, de n-butyle, d'isobutyle, de tertiobutyle, de 2-éthylhexyle, de glycidyle, les acrylates d'hydroxyalkyle, l'acrylonitrile, les monomères méthacryliques de formule $CH_2=C(CH_3)-C(=O)-O-R_2$ où $R_2$ désigne un atome d'hydrogène, un groupement alkyle en $C_1$-$C_{40}$ linéaire, cyclique ou ramifié éventuellement substitué par un atome d'halogène, un groupement hydroxy, alcoxy, cyano, amino ou époxy tels que par exemple l'acide méthacrylique, le méthacrylate de méthyle, d'éthyle, de propyle, de n-butyle, d'isobutyle, de tertiobutyle, de 2-éthylhexyle, de glycidyle, les méthacrylates d'hydroxyalkyle, le méthacrylonitrile, les monomères vinylaromatiques tels que par exemple le styrène, les styrènes substitués, l'alpha-méthylstyrène, le monochlorostyrène, le tertbutyl styrène.

**6.** Composition selon la revendication 1 dans la quelle les séquences macromoléculaires (II) sont préparées à partir d'acrylate de butyle et de styrène dans le rapport massique acrylate de butyle / styrène compris entre 70/30 et 90/10.

**7.** Composition selon la revendication 1 à 4 dans la quelle les séquences macromoléculaires (II) sont préparées en mélangeant au(x) monomère(s) destiné(s) à former les séquences macromoléculaires (II) une alcoxyamine de formule générale $Z(-T)_n$ dans laquelle Z désigne un groupement multivalent, T un nitroxyde et n est un entier supérieur ou égal à 2.

**8.** Composition selon la revendication 7 dans laquelle l'alcoxyamine répond à la formule suivante :

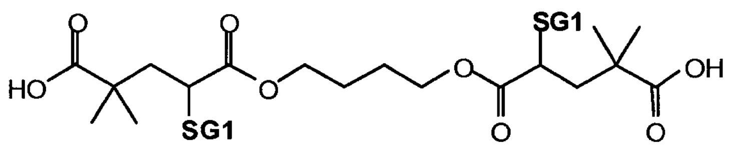

SG1 étant le N-tertiobutyl-1-diéthylphosphono-2,2-diméthylpropyl nitroxyde.

**9.** Composition selon la revendication 7 dans laquelle l'alcoxyamine répond à la formule suivante :

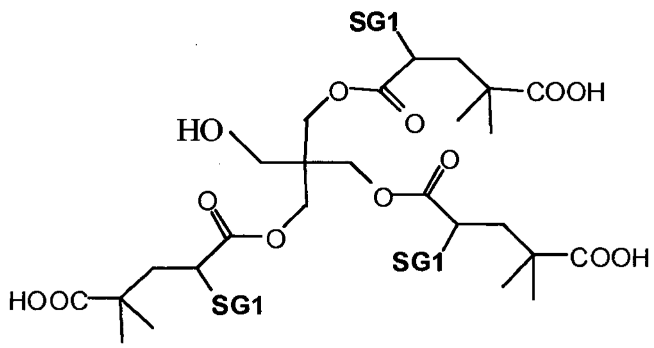

**10.** Procédé de préparation de composition acrylique réticulée transparente et résistante aux chocs constituée d'une matrice fragile (I) ayant une température de transition vitreuse supérieure a 0°C, et de domaines élastomèriques de dimension caractéristique inférieure à 100nm constitués par des séquences macromoléculaires (II) à caractère souple de température de transition vitreuse inférieure a 0°C, **caractérisées par** une masse moléculaire en nombre comprise entre 30000 et 500000 g/mole, dans laquelle la teneur en agent de réticulation est comprise entre 0.1 et 2 % en poids par rapport au matériau polymère réticulé, comprenant les étapes suivantes :

1. préparer les séquences macromoléculaires (II) en mélangeant au(x) monomère(s) destiné(s) à former les séquences macromoléculaires (II) une alcoxyamine de formule générale $Z(-T)_n$ dans laquelle Z désigne un groupement multivalent, T un nitroxyde et n est un entier supérieur ou égal à 2;
2. mélanger les séquences macromoléculaires (II) de l'étape 1 à du méthacrylate de méthyle, l'agent de réticulation, éventuellement au moins un comonomère M et au moins un amorceur radicalaire ;
3. couler le mélange obtenu à l'étape 2 dans un moule, puis le chauffer selon un cycle de température pour obtenir une plaque coulé.

**11.** Procédé selon la revendication 10 dans laquelle est rajoutés dans le mélange qui est coulé dans le moule au cours de l'étape 3 du procédé un autre ingrédient choisi parmi:

• des charges opacifiantes, telles que le $TiO_2$ ou le $BaSO_4$, utilisées le plus souvent sous forme de pâtes préfabriquées dans un plastifiant de type dialkyl phtalate ;
• des colorants organiques ou de pigments minéraux colorés ;
• des plastifiants ;
• des additifs anti-UV tels que le Tinuvin P de Ciba utilisé à des teneurs de 0 à 1000 ppm et de préférence 50 à 500 ppm par rapport au mélange qui est coulé dans le moule ;
• des stabilisants lumière ou chaleur comme par exemple le Tinuvin 770 ;
• des antioxydants ;
• des additifs ignifugeants tels que par exemple le tris (2-chloro-propyle) phosphate ;
• des agents épaississants tel que par exemple l'acétobutyrate de cellulose ;
• des agents de démoulage tels que par exemple le dioctyl sulfosuccinate de sodium utilisés à des teneurs de 0 à 500 ppm et de préférence 0 à 200 ppm par rapport au mélange qui est coulé dans le moule ;
• des charges minérales ou organiques (par ex. polyamide, PTFE, $BaSO_4$) destinées à diffuser la lumière.

**12.** Objet obtenu à partir d'une composition selon une des revendications 1 à 9.

**13.** Utilisation d'un objet selon la revendication 12 dans les domaines de vitrages, de murs antibruit, d'écrans plats, des articles sanitaires.

## Patentansprüche

**1.** Transparente und schlagzähe vernetzte Acrylzusammensetzung, bestehend aus einer spröden Matrix (I) mit einer Glasübergangstemperatur von mehr als 0°C und elastomeren Domänen mit einer charakteristischen Abmessung von weniger als 100 nm aus makromolekularen Sequenzen (II) mit flexiblem Charakter mit einer Glasübergangstemperatur von weniger als 0°C, die durch ein zahlenmittleres Molekulargewicht zwischen 30.000 und 500.000 g/mol gekennzeichnet sind, wobei der Vernetzungsmittelgehalt zwischen 0,1 und 2 Gew.-%, bezogen auf das vernetzte Polymermaterial, liegt.

**2.** Zusammensetzung nach Anspruch 1, wobei der Gehalt an makromolekularen Sequenzen (II) zwischen 5 und 20 Gew.-% liegt.

**3.** Zusammensetzung nach Anspruch 1 bis 2, wobei das Vernetzungsmittel aus der Gruppe bestehend aus Polyolpolyacrylaten, Alkylenglykolpolyacrylaten oder Allylacrylat, Ethylenglykoldiacrylat, 1,3-Butylenglykoldiacrylat oder 1,4-Butylenglykoldiacrylat, polyfunktionellen Methacrylmonomeren wie Polyolpolymethacrylaten, Alkylenglykolpolymethacrylaten oder Allylmethacrylat, Ethylenglykoldimethacrylat, 1,3-Butylenglykoldimethacrylat oder 1,4-Butylenglykoldimethacrylat, Divinylbenzol oder Trivinylbenzol ausgewählt ist.

**4.** Zusammensetzung nach Anspruch 1 bis 2, wobei es sich bei dem Vernetzungsmittel um Butylenglykoldimethacrylat handelt.

5. Zusammensetzung nach Anspruch 1, wobei die makromolekularen Sequenzen (II) aus Monomeren, die aus Acrylmonomeren der Formel $CH_2=CH-C(=O)-O-R_1$, wobei $R_1$ für ein Wasserstoffatom oder eine lineare, cyclische oder verzweigte $C_1$-$C_{40}$-Alkylgruppe, die gegebenenfalls durch ein Halogenatom, eine Hydroxy-, Alkoxy-, Cyano-, Amino- oder Epoxidgruppe substituiert ist, steht, wie beispielsweise Acrylsäure, Methylacrylat, Ethylacrylat, Propylacrylat, n-Butylacrylat, Isobutylacrylat, tert.-Butylacrylat, 2-Ethylhexylacrylat, Glycidylacrylat, Hydroxyalkylacrylaten und Acrylnitril, Methacrylmonomeren der Formel $CH_2=C(CH_3)-C(=O)-O-R_2$, wobei $R_2$ für ein Wasserstoffatom oder eine lineare, cyclische oder verzweigte $C_1$-$C_{40}$-Alkylgruppe, die gegebenenfalls durch ein Halogenatom, eine Hydroxy-, Alkoxy-, Cyano-, Amino- oder Epoxidgruppe substituiert ist, steht, wie beispielsweise Methacrylsäure, Methylmethacrylat, Ethylmethacrylat, Propylmethacrylat, n-Butylmethacrylat, Isobutylmethacrylat, tert.-Butylmethacrylat, 2-Ethylhexylmethacrylat, Glycidylmethacrylat, Hydroxyalkylmethacrylaten und Methacrylnitril, und vinylaromatischen Monomeren wie beispielsweise Styrol, substituierten Styrolen, alpha-Methylstyrol, Monochlorstyrol und tert.-Butylstyrol ausgewählt sind, hergestellt werden.

6. Zusammensetzung nach Anspruch 1, wobei die makromolekularen Sequenzen (II) aus Butylacrylat und Styrol im Gewichtsverhältnis Butylacrylat/Styrol zwischen 70/30 und 90/10 hergestellt werden.

7. Zusammensetzung nach Anspruch 1 bis 4, wobei die makromolekularen Sequenzen (II) hergestellt werden, indem man das Monomer bzw. die Monomere zur Bildung der makromolekularen Sequenzen (II) mit einem Alkoxyamin der allgemeinen Formel $2(-T)_n$, worin Z für eine mehrwertige Gruppe steht, T für ein Nitroxid steht und n eine ganze Zahl größer gleich 2 ist, mischt.

8. Zusammensetzung nach Anspruch 7, wobei das Alkoxyamin der folgenden Formel entspricht:

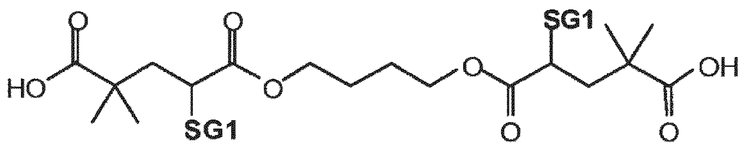

wobei SG1 N-(tert.-Butyl)-1-diethylphosphono-2,2-dimethylpropylnitroxid ist.

9. Zusammensetzung nach Anspruch 7, wobei das Alkoxyamin der folgenden Formel entspricht:

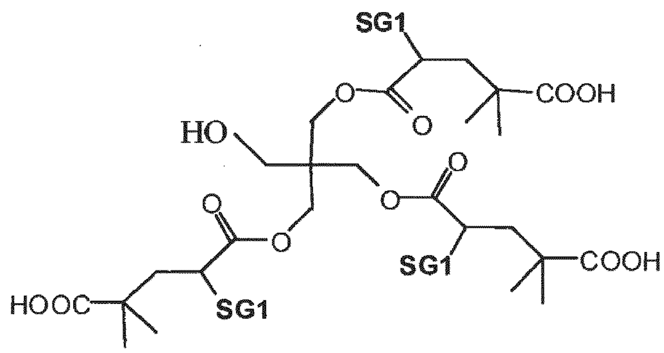

10. Verfahren zur Herstellung einer transparenten und schlagzähen vernetzten Acrylzusammensetzung, bestehend aus einer spröden Matrix (I) mit einer Glasübergangstemperatur von mehr als 0°C und elastomeren Domänen mit einer charakteristischen Abmessung von weniger als 100 nm aus makromolekularen Sequenzen (II) mit flexiblem Charakter mit einer Glasübergangstemperatur von weniger als 0°C, die durch ein zahlenmittleres Molekulargewicht zwischen 30.000 und 500.000 g/mol gekennzeichnet sind, wobei der Vernetzungsmittelgehalt zwischen 0,1 und 2 Gew.-%, bezogen auf das vernetzte Polymermaterial, liegt, bei dem man:

1. die makromolekularen Sequenzen (II) herstellt, indem man das zur Bildung der makromolekularen Sequenzen (II) vorgesehene Monomer bzw. die zur Bildung der makromolekularen Sequenzen (II) vorgesehenen Monomere mit einem Alkoxyamin der allgemeinen Formel $2(-T)_n$, worin Z für eine mehrwertige Gruppe steht, T für ein Nitroxid steht und n eine ganze Zahl größer gleich 2 ist, mischt;

2. die makromolekularen Sequenzen (II) aus Schritt 1 mit Methylmethacrylat, dem Vernetzungsmittel, gegebenenfalls mindestens einem Comonomer M und mindestens einem Radikalinitiator mischt;
3. die in Schritt 2 erhaltene Mischung in eine Form gießt und sie dann gemäß einem Temperaturzyklus erhitzt, wobei man eine gegossene Platte erhält.

**11.** Verfahren nach Anspruch 10, bei dem zu der Mischung, die in Schritt 3 des Verfahrens in die Form gegossen wird, ein weiterer Bestandteil, der aus

• trübenden Füllstoffen, wie $TiO_2$ oder $BaSO_4$, die meist in Form von vorgefertigten Pasten in einem Weichmacher vom Dialkylphthalat-Typ verwendet werden;
• organischen Farbstoffen oder anorganischen Farbpigmenten;
• Weichmachern;
• Anti-UV-Additiven wie Tinuvin P von Ciba, die in Gehalten von 0 bis 1000 ppm und vorzugsweise 50 bis 500 ppm, bezogen auf die Mischung, die in die Form gegossen wird, verwendet werden;
• Licht- oder Wärmestabilisatoren wie beispielsweise Tinuvin 770;
• Antioxidantien;
• flammhemmenden Additiven wie beispielsweise Tris(2-chlorpropyl)phosphat;
• Verdickungsmitteln wie beispielsweise Celluloseacetatbutyrat;
• Formtrennmitteln wie beispielsweise Natriumdioctylsulfosuccinat, die in Gehalten von 0 bis 500 ppm und vorzugsweise 0 bis 200 ppm, bezogen auf die Mischung, die in die Form gegossen wird, verwendet werden;
• anorganischen oder organischen Füllstoffen (z.B. Polyamid, PTFE, $BaSO_4$) zur Lichtstreuung ausgewählt wird, zugesetzt wird.

**12.** Gegenstand, erhalten aus einer Zusammensetzung nach einem der Ansprüche 1 bis 9.

**13.** Verwendung eines Gegenstands nach Anspruch 12 auf den Gebieten Fenster, Lärmschutzwände, Flachbildschirme oder Sanitärartikel.

## Claims

**1.** Transparent and impact-resistant crosslinked acrylic composition consisting of a brittle matrix (I) having a glass transition temperature of greater than 0°C and of elastomeric domains having a characteristic dimension of less than 100 nm consisting of macromolecular sequences (II) having a flexible nature with a glass transition temperature of less than 0°C, **characterized by** a number-average molecular weight of between 30 000 and 500 000 g/mol, in which the content of crosslinking agent is between 0.1 and 2% by weight, with respect to the crosslinked polymer material.

**2.** Composition according to Claim 1, in which the content of macromolecular sequences (II) is between 5 and 20% by weight.

**3.** Composition according to Claims 1 and 2, in which the crosslinking agent is chosen from polyol polyacrylates, alkylene glycol polyacrylates or allyl acrylate, ethylene glycol diacrylate, 1,3-butylene glycol diacrylate or 1,4-butylene glycol diacrylate, polyfunctional methacrylic monomers, such as polyol polymethacrylates, alkylene glycol polymethacrylates or allyl methacrylate, ethylene glycol dimethacrylate, 1,3-butylene glycol dimethacrylate or 1,4-butylene glycol dimethacrylate, divinylbenzene or trivinylbenzene.

**4.** Composition according to Claims 1 and 2, in which the crosslinking agent is butylenes glycol dimethacrylate.

**5.** Composition according to Claim 1, in which the macromolecular sequences (II) are prepared from monomers chosen from acrylic monomers of formula $CH_2=CH-C(=O)-O-R_1$, where $R_1$ denotes a hydrogen atom or a linear, cyclic or branched $C_1$-$C_{40}$ alkyl group optionally substituted by a halogen atom or a hydroxyl, alkoxy, cyano, amino or epoxy group, such as, for example, acrylic acid, methyl acrylate, ethyl acrylate, propyl acrylate, n-butyl acrylate, isobutyl acrylate, tert-butyl acrylate, 2-ethylhexyl acrylate, glycidyl acrylate, hydroxyalkyl acrylates or acrylonitrile, methacrylic monomers of formula $CH_2=C(CH_3)-C(=O)-O-R_2$. where $R_2$ denotes a hydrogen atom or a linear, cyclic or branched $C_1$-$C_{40}$ alkyl group optionally substituted by a halogen atom or a hydroxyl, alkoxy, cyano, amino or epoxy group, such as, for example, methacrylic acid, methyl methacrylate, ethyl methacrylate, propyl methacrylate, n-butyl methacrylate, isobutyl methacrylate, tert-butyl methacrylate, 2-ethylhexyl methacrylate, glycidyl methacrylate, hydroxyalkyl methacrylates or methacrylonitrile, or vinylaromatic monomers, such as, for example, styrene, substituted styrenes, α-methylstyrene, monochlorostyrene or tert-butylstyrene.

6. Composition according to Claim 1, in which the macromolecular sequences (II) are prepared from butyl acrylate and styrene in the butyl acrylate/styrene ratio by weight of between 70/30 and 90/10.

7. Composition according to Claims 1 to 4, in which the macromolecular sequences (II) are prepared by mixing, with the monomer (s) intended to form the macromolecular sequences (II), an alkoxyamine of general formula $Z(-T)_n$ in which Z denotes a polyvalent group, T denotes a nitroxide and n is an integer greater than or equal to 2.

8. Composition according to Claim 7, in which the alkoxyamine corresponds to the following formula:

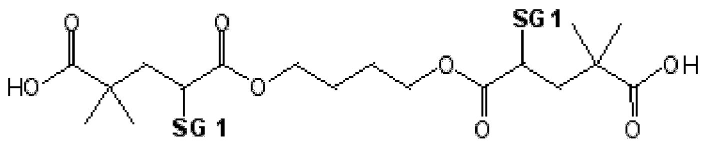

SG1 being N-(tert-butyl)-1-diethylphosphono-2,2-dimethylpropyl nitroxide.

9. Composition according to Claim 7, in which the alkoxyamine corresponds to the following formula:

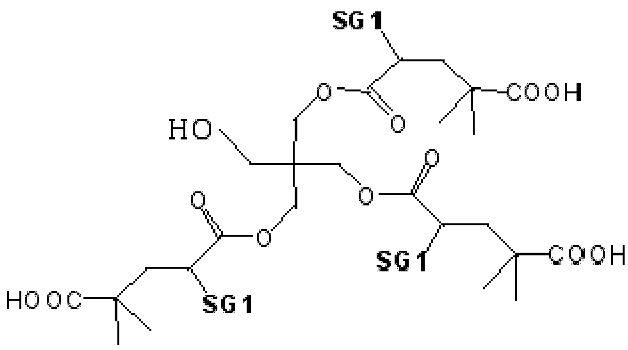

10. Process for the preparation of a transparent and impact-resistant crosslinked acrylic composition consisting of a brittle matrix (I) having a glass transition temperature of greater than 0°C and of elastomeric domains having a characteristic dimension of less than 100 nm consisting of macromolecular sequences (II) having a flexible nature with a glass transition temperature of less than 0°C, **characterized by** a number-average molecular weight of between 30 000 and 500 000 g/mol, in which the content of crosslinking agent is between 0.1 and 2% by weight, with respect to the crosslinked polymer material, comprising the following stages:

1. preparing the macromolecular sequences (II) by mixing, with the monomer (s) intended to form the macromolecular sequences (II), an alkoxyamine of general formula $Z(-T)_n$, in which Z denotes a polyvalent group, T denotes a nitroxide and n is an integer greater than or equal to 2;
2. mixing the macromolecular sequences (II) of stage 1 with methyl methacrylate, the crosslinking agent, optionally at least one comonomer M and at least one radical initiator;
3. casting the mixture obtained in stage 2 in a mold and then heating it according to a temperature cycle in order to obtain a cast sheet.

11. Process according to Claim 10, in which there is added, to the mixture which is cast in the mold during stage 3 of the process, another ingredient chosen from:

• opacifying fillers, such as $TiO_2$ or $BaSO_4$, generally used in the form of pastes prefabricated in a plasticizer of dialkyl phthalate type;
• colored organic dyes or colored inorganic pigments;
• plasticizers;

- UV-stabilizing additives, such as Tinuvin P from Ciba, used at contents of 0 to 1000 ppm and preferably 50 to 500 ppm, with respect to the mixture which is cast in the mold;
- light or heat stabilizers, such as, for example, Tinuvin 770;
- antioxidants;
- flame-retarding additives, such as, for example, tris(2-chloropropyl) phosphate;
- thickening agents, such as, for example, cellulose acetate butyrate;
- mold-release agents, such as, for example, dioctyl sodium sulfosuccinate, used at contents of 0 to 500 ppm and preferably 0 to 200 ppm, with respect to the mixture which is cast in the mold;
- inorganic or organic fillers (for example polyamide, PTFE or $BaSO_4$) intended to scatter light.

**12.** Item obtained from a composition according to one of Claims 1 to 9.

**13.** Use of an item according to Claim 12 in the fields of windows, noise-reducing walls, flat screens or bathroom fittings.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9929772 A
- WO 02055573 A
- WO 03062293 A
- EP 1858939 A
- US 590549 A
- FR 9904405


### Littérature non-brevet citée dans la description


- **KIRK-OTHMER.** Encyclopedia of Chemical Technology. vol. 6, 798
- *Accounts of Chemical Research,* 1976, vol. 9, 13-19
- **D. GRESZTA.** *Macromolecules,* 1996, vol. 29, 7661-7670